# EUROPEAN PATENT SPECIFICATION

(11) **EP 2 909 352 B1**
(45) Date of publication and mention of the grant of the patent: **27.05.2020**
(21) Application number: 13846727.9
(22) Date of filing: 17.10.2013
(51) Int. Cl.: C23C 2/06, C23C 2/12, C23C 2/28

(54) **METHOD OF PRODUCING METAL COATED STEEL STRIP**
VERFAHREN ZUR HERSTELLUNG METALLBESCHICHTETER STAHLSTREIFEN
PROCÉDÉ PERMETTANT DE PRODUIRE UNE BANDE D'ACIER RECOUVERTE DE MÉTAL

(30) Priority: 18.10.2012 AU 2012904547
(43) Date of publication of application: 26.08.2015
(73) Proprietor: Bluescope Steel Limited, Melbourne, VIC 3000 (AU)
(72) Inventor: NEUFELD, Aaron Kiffer, Figtree New South Wales 2525 (AU); SMITH, Ross McDowall, Cordeaux Heights New South Wales 2526 (AU); LIU, Qiyang, Mount Keira New South Wales 2500 (AU); TAPSELL, Geoff, Woonona New South Wales 2517 (AU)
(74) Representative: Hedges, Martin Nicholas
(86) International application number: PCT/AU2013/001196
(87) International publication number: WO 2014/059474

(56) References cited:
- EP-A1- 1 524 326
- WO-A1-2009/097663
- CA-A1- 1 274 754
- US-A- 4 165 401
- US-A- 4 812 371
- US-A1- 2009 098 295
- DATABASE WPI Week 198506 4 February 1985 (1985-02-04) Thomson Scientific, London, GB; AN 1985-033619 XP002743544, -& JP S59 226161 A (NIPPON STEEL CORP) 19 December 1984 (1984-12-19)
- Zaclon Inc.: "Galvanizing Handbook", , 1 September 1996 (1996-09-01), XP055445436, Retrieved from the Internet: URL:http://www.zaclon.com/pdf/Zaclon%20Gal vanizing%20Handbook.pdf [retrieved on 2018-01-29]

## Description

The present invention relates to the production of steel strip, which has a corrosion-resistant metal alloy coating.

The present invention relates particularly, although by no means exclusively, to the production of strip, typically steel strip, which has a coating of a corrosion-resistant metal alloy that contains magnesium as one of the main elements in the alloy.

The present invention relates particularly to the production of steel strip which has coatings of corrosion-resistant AL-Zn-Si-Mg metal alloys.

In particular, the present invention relates to a hot-dip metal coating method of forming a coating of a metal alloy that contains magnesium as one of the main elements in the alloy on a strip that includes dipping uncoated strip into a bath of molten alloy and forming a coating of the alloy on the strip.

Depending on the end-use application, the metal -coated strip may be painted, for example with a polymeric paint, on one or both surfaces of the strip. In this regard, the metal- coated strip may be sold as an end product itself or may have a paint coating applied to one or both surfaces and be sold as a painted end product.

### BACKGROUND ART

One corrosion resistant metal alloy coating that is used widely in Australia and elsewhere for building products, particularly profiled wall and roofing sheets, is an Al-Zn alloy coating composition, more particularly a coating formed from a 55%Al-Zn alloy that also comprises Si in the alloy. The profiled sheets are usually manufactured by cold forming painted, metal alloy coated strip. Typically, the profiled sheets are manufactured by roll-forming the painted strip.

The addition of Mg to this known composition of 55%Al-Zn alloy has been proposed in the patent literature for a number of years, see for example US patent 6,635,359 in the name of Nippon Steel Corporation.

Another Al-Zn-Si-Mg alloy coating that is described in the patent literature although not commercially available in Australia is formed from Al-Zn-Si-Mg alloys that contain in % by weight: Al: 2 to 19 %, Si: 0.01 to 2%, Mg: 1 to 10 %, balance Zn and unavoidable impurities. The alloy coating is described and claimed in Australian patent 758643 entitled "Plated steel product, plated steel sheet and precoated steel sheet having excellent resistance to corrosion" in the name of Nippon Steel Corporation.

It has been established that when Mg is included in Al-Zn alloy coating compositions, Mg brings about certain beneficial effects on product performance, such as improved cut-edge protection.

The applicant has carried out extensive research and development work in relation to Al-Zn-Si-Mg alloy coatings on strip such as steel strip. The present invention is the result of part of this research and development work.

The above discussion is not to be taken as an admission of the common general knowledge in Australia and elsewhere.

US2009/0098295, which is considered to represent the closest prior art, discloses a method of forming a coating on a metal alloy on a steel strip by providing the steel strip with a layer of zinc or zinc alloy by a hot dip process or through electrolytic deposition. The galvanize steel is vacuum coated with an additional metal. This is followed by thermal diffusion treatment, wherein atoms of the metal layer applied by vacuum diffuse into the layer of zinc or zinc alloy line below. As a result of the residual gas remaining in the vacuum and during the thermal diffusion treatment, a native oxide film is formed on the surface of the coated steel strip, which passivates the surface and therefore increases its corrosion resistance.

Other methods are disclosed in US4812371, JP59-226161, and EP 1524326.

The research and development work that is relevant to the present invention included a series of plant trials on metal coating lines of the applicant to investigate the viability of forming particular metal alloy coatings, namely Al-Zn-Si-Mg alloy coatings, on steel strip on these metal coating lines. The plant trials found that Al-Zn-Si-Mg alloy coatings are far more reactive with quench water used to cool metal alloy coatings on strip after coated strip leaves molten alloy baths in the metal coating lines than conventional Al-Zn coatings. More particularly, the applicant found that:
(a) there was greater dissolution of Al-Zn-Si-Mg alloy coatings into quench water than was the case with conventional Al-Zn coatings;
(b) the greater dissolution of the metal alloy coatings could result in removal of a corrosion resistant native oxide layer, as described herein, from exposed surfaces of the coatings;
(c) the removal of the native oxide layers from surfaces of the Al-Zn-Si-Mg alloy coatings exposed the Al-Zn-Si-Mg alloy coatings to corrosion that caused defects such as crevices, pits, black spots, voids, channels, and speckles in surfaces of the coated strip; and
(d) the surface defects had a negative impact on the effectiveness of subsequent passivation of the coated strip with a passivation solution.

The term "native oxide" is understood herein to mean the first oxide to form on the surface of the metal alloy coating, with its chemical make-up being intrinsically dependent on the composition of the metal alloy coating.

More particularly, the applicant has found that the native oxide layer is important in terms of preventing corrosion of an underlying metal alloy coating layer as the coated strip is processed downstream of the metal coating bath. In particular, the applicant has found that it is important to maintain the native oxide layer at least substantially intact in order to maintain a metal alloy coating layer that has a suitable surface quality for passivation with a passivation solution. More particularly, the applicant has found that complete removal of the native oxide layer can lead to corrosion of the metal alloy coating before a downstream passivation step, with the corrosion including any one of the following surface defects of crevices, pits, black spots, voids, channels, and speckles.

The applicant has realised that the above-described problem is not confined to coatings of Al-Zn-Si-Mg alloy and extends generally to metal alloy coatings of alloys that contain Mg and, as a consequence are more reactive in downstream processing operations, such as water quenching, on coated strip.

According to the present invention there is provided a method of forming a coating of a metal alloy on a steel strip according to claim 1.

The method may include a step of treating the metal alloy coated strip with a passivation solution.

The strip cooling step may include controlling the pH of cooling water to be less than 8.

The strip cooling step may include controlling the pH of cooling water to be less than 7.

The strip cooling step may include controlling the pH of cooling water to be greater than 6.

The strip cooling step may include controlling cooling water temperature to be less than 45 °C.

The strip cooling step may include controlling cooling water temperature to be greater than 35°C.

The strip cooling step may include controlling cooling water temperature to be greater than 40°C.

The strip cooling step may include controlling the pH by adding acid to the cooling water.

The strip cooling step may include controlling the pH by adding acid and other salts, buffers, wetting agents, surfactants, coupling agents, etc.

The acid may be any suitable acid such as phosphoric acid and nitric acid by way of example.

The strip cooling step may be a water quench step.

The strip cooling step may be a closed loop in which water is circulated through a circuit that supplies water to the coated strip and collects and cools water and returns the cooled water for cooling the coated strip.

The closed loop may include a water storage tank, a spray system for supplying water to the coated strip from the tank, and a heat exchanger for cooling water after it has been sprayed onto the strip.

The strip cooling step may be an open loop in which cooling water is not recycled in the cooling step.

The strip cooling step may include controlling the operating conditions to cool the coated strip to a temperature range of 28-55°C.

The strip cooling step may include controlling the operating conditions to cool the coated strip to a temperature range of 30-50°C.

The method may include other steps including any one or more of the following steps in addition to the above-described hot dip coating step, water cooling step, and passivation step:
(a) pre-treating strip to clean the strip before the hot dip coating step,
(b) controlling the thickness of the coated strip immediately after the coating step,
(c) rolling the coated strip, and
(d) coiling the coated strip.

One type of metal alloy of particular interest to the applicant for coatings is Al-Zn-Si-Mg alloys. The Al-Zn-Si-Mg alloy in the invention includes the following ranges in % by weight:
Zn: 30 to 60 %
Si: 0.3 to 3%
Mg: 0.3 to 10 %
Balance Al and unavoidable impurities.

The Al-Zn-Si-Mg alloy may include the following ranges in % by weight of the elements Al, Zn, Si, and Mg:
Zn: 35 to 50 %
Si: 1.2 to 2.5%
Mg 1.0 to 3.0%
Balance Al and unavoidable impurities.

The Al-Zn-Si-Mg alloy may contain other elements that are present as unavoidable impurities. The other elements may include by way of example any one or more of Fe, Sr, Cr, and V.

By way of particular example, the other elements may include Ca for dross control in molten coating baths. It is noted that the composition of the as-solidified coating of the Al-Zn-Si-Mg alloy may be different to an extent to the composition of the Al-Zn-Si-Mg alloy used to form the coating due to factors such as partial dissolution of the metal strip into the coating during the coating process.

The steel may be a low carbon steel.

The Al-Zn-Si-Mg alloy used to form the coating of the Al-Zn-Mg-Si alloy coated steel strip includes the following ranges in % by weight of the elements Al, Zn, Si, and Mg:
Zn: 30 to 60 %
Si: 0.3 to 3%
Mg: 0.3 to 10 %
Balance Al and unavoidable impurities.

### BRIEF DESCRIPTION OF THE DRAWINGS

The present invention is described further by way of example with reference to the accompanying drawings of which:
Figure 1 is a schematic drawing of a continuous metal coating line for forming an Al-Zn-Si-Mg alloy coating on steel strip in accordance with the method of the present invention; and
Figures 2(a) to 2(d) are graphs illustrating the results of x-ray photoelectron spectroscopy analysis of the metal alloy coating surfaces of metal alloy coated steel strip samples.

### DESCRIPTION OF EMBODIMENTS

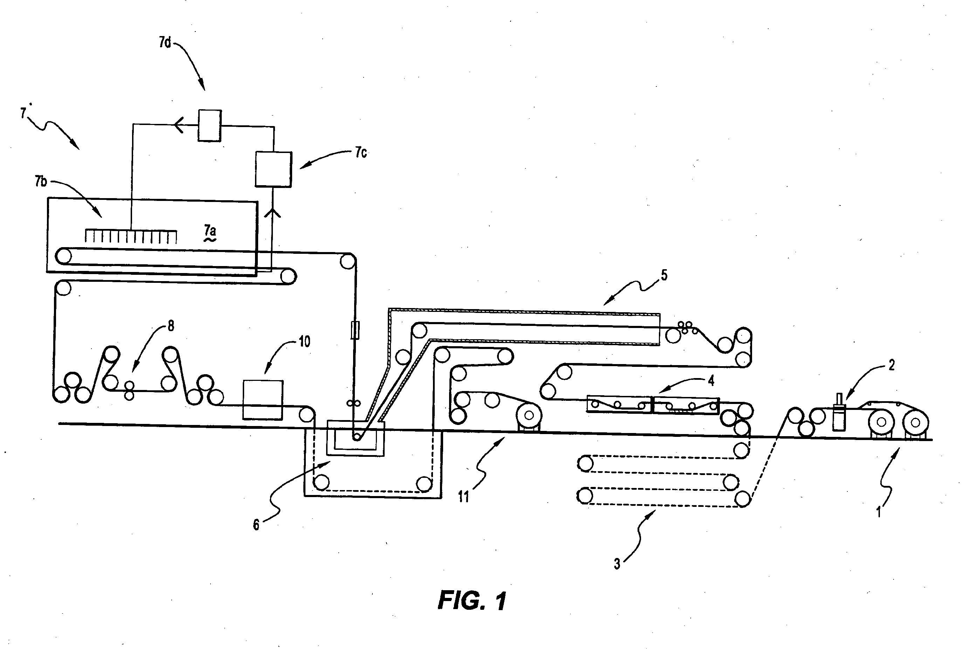

With reference to Figure 1, in use, coils of cold rolled low carbon steel strip are uncoiled at an uncoiling station 1 and successive uncoiled lengths of strip are welded end to end by a welder 2 and form a continuous length of strip.

The strip is then passed successively through an accumulator 3, a strip cleaning section 4 and a furnace assembly 5. The furnace assembly 5 includes a preheater, a preheat reducing furnace, and a reducing furnace.

The strip is heat treated in the furnace assembly 5 by careful control of process variables including: (i) the temperature profile in the furnaces, (ii) the reducing gas concentration in the furnaces, (iii) the gas flow rate through the furnaces, and (iv) strip residence time in the furnaces (i.e. line speed).

The process variables in the furnace assembly 5 are controlled so that there is removal of iron oxide residues from the surface of the strip and removal of residual oils and iron fines from the surface of the strip.

The heat treated strip is then passed via an outlet snout downwardly into and through a molten bath containing an Al-Zn-Si-Mg alloy held in a coating pot 6 and is coated with the Al-Zn-Si-Mg alloy. Typically, the Al-Zn-Si-Mg alloy in the coating pot 6 comprises in % by weight: Zn: 30 to 60 %, Si: 0.3 to 3 %, Mg: 0.3 to 10 %, and balance Al and unavoidable impurities. It is also noted that the Al-Zn-Si-Mg alloy may contain other elements as impurities. For example, the coating pot 6 may also contain Ca for dross control in the molten bath. The Al-Zn-Si-Mg alloy is maintained molten in the coating pot at a selected temperature by use of heating inductors (not shown). Within the bath the strip passes around a sink roll and is taken upwardly out of the bath. The line speed is selected to provide a selected immersion time of strip in the coating bath. Both surfaces of the strip are coated with the Al-Zn- Si-Mg alloy as it passes through the bath.

After leaving the coating bath 6 the strip passes vertically through a gas wiping station (not shown) at which its coated surfaces are subjected to jets of wiping gas to control the thickness of the coating.

The exposed surfaces of the Al-Zn-Si-Mg alloy coating oxidise as the coated strip moves through the gas wiping station and a native oxide layer forms on the exposed surfaces of the coating. As indicated above, the native oxide is the first oxide to form on the surface of the metal alloy coating, with its chemical make-up being intrinsically dependent on the composition of the metal alloy coating, including Mg oxide, Al oxide, and a small amount of oxides of other elements of the Al-Zn-Si-Mg alloy coating.

The coated strip is then passed through a cooling section 7 and is subjected to forced cooling by means of a water quench step. The forced cooling may include a forced air cooling step (not shown) before the water quench step. The water quench step is, by way of example, a closed loop in which water sprayed onto coated strip is collected and then cooled for re-use to cool coated strip. The cooling section 7 includes a coated strip cooling chamber 7a, a spray system 7b that sprays water onto the surface of the coated strip as it moves through the cooling chamber 7a, a water quench tank 7c for storing water that is collected from the cooling chamber 7b, and a heat exchanger 7d for cooling water from the water quench tank 7c before transferring the water to the spray system 7b. In accordance with one embodiment of the present invention (a) the pH of the cooling water supplied to the spray system 7b is controlled to be in a range of pH 5-9, typically in a range of 6-8, and (b) the temperature of the cooling water supplied to the spray system is controlled to be in range of 30-50°C. The applicant has found that both control steps (a) and (b) minimise removal of the native oxide layer on the Al-Zn-Si-Mg alloy coating on the coated strip.

The pH and temperature control may be achieved, by way of example, by using a pH probe and a temperature sensor in an overflow tank of the water quench tank 7c and supplying data from the probe/sensor to a PLC and calculating required acid additions to maintain the pH at predetermined set points for pH and the water temperature, with any acid additions and temperature adjustments being made so that the water in the water quench tank 7c is controlled to the set points for pH and temperature. This is not the only possible option for achieving pH and temperature control.

The pH, temperature, and chemical control may also be achieved, by way of example, by using a once through water cooling system where the quench water is not recirculated and the input water has pH and temperature properties as described above.

The cooled, coated strip is then passed through a rolling section 8 that conditions the surface of the coated strip. This section may include one or more of skin pass and tension leveling operations.

The conditioned strip is then passed through a passivation section 10 and coated with a passivation solution to provide the strip with a degree of resistance to wet storage and early dulling.

The coated strip is thereafter coiled at a coiling station 11.

As discussed above, the applicant has conducted extensive research and development work in relation to Al-Zn-Si-Mg alloy coatings on steel strip.

As discussed above, the applicant has found in the research and development work that the native oxide layer that forms as the metal alloy coated strip moves through the gas wiping station is important in terms of minimising corrosion of the underlying metal alloy coating as the coated strip is processed downstream of the bath.

In particular, the applicant has found that it is important to maintain the native oxide layer at least substantially intact in order to maintain a metal alloy coating that has a suitable surface quality for passivation with a passivation solution.

More particularly, the applicant has found that total removal of the native oxide layer can lead to corrosion of the metal alloy coating before a downstream passivation step, with the corrosion including any one of the following surface defects of crevices, pits, black spots, voids, channels, and speckles.

The research and development work relevant to the native oxide issue included x-ray photoelectron spectroscopy (XPS) depth profiling analysis to assess the conditions of the surfaces of a series of metal alloy coatings.

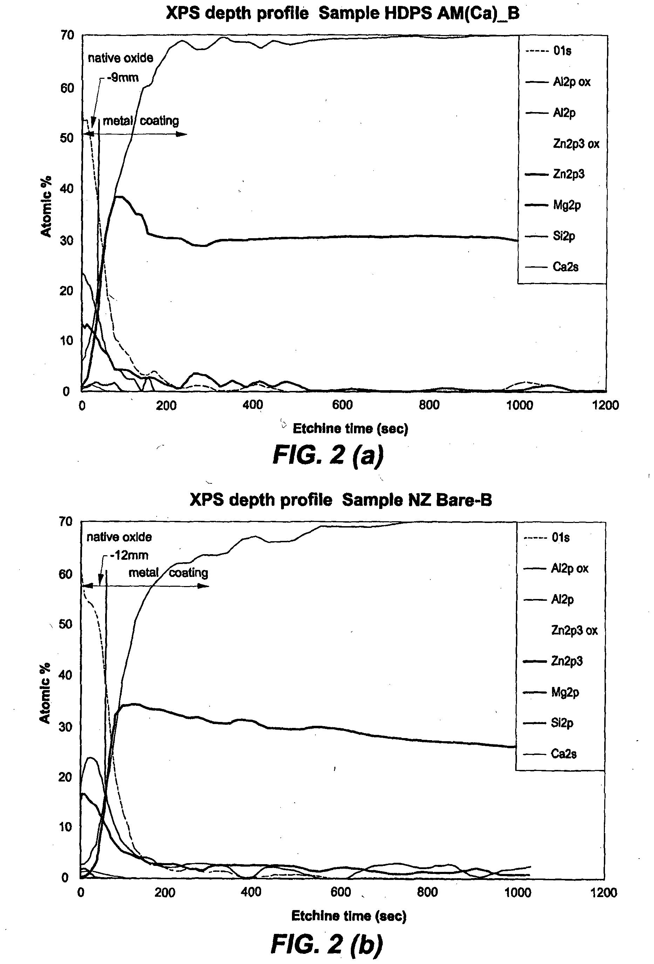

The graphs of Figures 2(a) to 2(d) are the results of XPS analysis of various materials, representing a set of possible metal coating surface conditions.

The graph of Figure 2(a) is an XPS depth profile of the surface of an Al-Zn-Si-Mg alloy coated steel panel produced on the Hot Dip Process Simulator (HDPS) at the research facilities of the applicant. The HDPS is a state-of-the-art unit purpose-built to the specifications of the applicant by Iwatani International Corp (Europe) GmbH. The HDPS unit comprises a molten metal pot furnace, an infrared heating furnace, gas wiping nozzles, de-drossing mechanisms, gas mixing and dewpoint management functions, and computerized automatic control systems. The HDPS unit is capable of simulating a typical hot dip cycle on a conventional metal coating line. The horizontal axis of Figure 2(a) marked "Etchine time" refers to the etching time in the analysis and indicates the depth of the coating from the surface of the coating. Each of the lines in the Figure indicates a different atomic component in the coating. Figure 2(a) indicates that a thin oxide layer of approximately 9nm thickness was detected on the Al-Zn-Si-Mg alloy coated steel panel. The oxide layer consisted primarily of aluminium and magnesium oxides. The HDPS has gas cooling but no water quench, and thus the oxide layer is representative of oxides forming on the surface of the molten coating at elevated temperatures. One characteristic of the oxide layer is the presence of a small portion of calcium oxide (∼2at%Ca) resulted from a low level of Ca addition in the molten coating bath for dross control. The oxide is described as a "native oxide" by the applicant, as it is the first oxide to form on the surface of the metal coating and its chemical make-up is intrinsically dependant on the composition of the metal coating.

The graph of Figure 2(b) is an XPS depth profile of the surface of an Al-Zn-Si-Mg alloy coated steel panel produced on one of the applicant's metal coating lines where there is a water quench step in the production loop and the pH and temperature of the quench water is controlled. The pH was controlled with nitric acid addition to be pH 5-8 and the temperature was controlled to be 35-55°C. Figure 2(b) shows that a small portion only of the native oxide was removed due to the water quench. However, the presence of Ca indicates that the native oxide was not totally removed. Moreover, there was no corrosion of the underlying Al-Zn-Si-Mg alloy coating. Significantly, Figure 2(b) also indicates that under the particular water quench conditions, it was possible to maintain a partial native oxide layer.

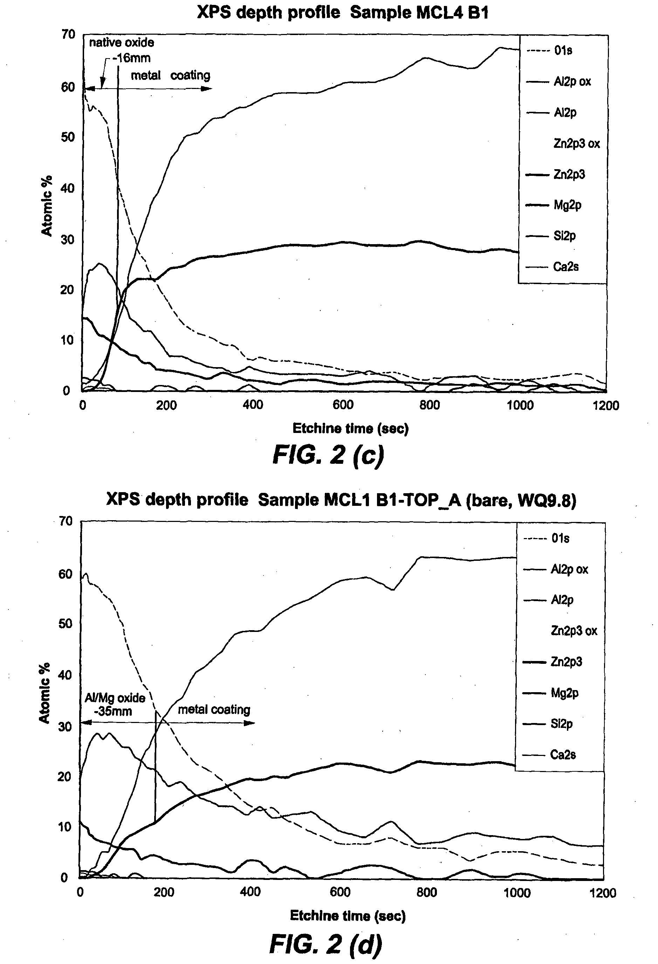

The graph of Figure 2(c) is an XPS depth profile of the surface of an Al-Zn-Si-Mg alloy coated steel panel produced on another metal coating line of the applicant, where there is also a water quench step in the production loop. The pH was controlled to be pH 5-8 and the temperature was controlled to be 35-55°C. Figure 2(c) shows that the conditions of the water quench were such that there was partial removal of the native oxide layer and Ca was detected at levels lower than that in Figures 2(a) or 2(b). Some new oxide formed on the surface of the Al-Zn-Si-Mg alloy coating, presumably during or following the quench process. Nevertheless, there was no corrosion attack on the underlying structure of the Al-Zn-Si-Mg alloy coating.

The graph of Figure 2(d) is an XPS depth profile of the surface of an Al-Zn-Si-Mg alloy coated steel panel produced on yet another metal coating line of the applicant, where there is also a water quench step in the production loop. The pH was controlled to be greater than pH 9 and the temperature was controlled to be greater than 50°C. Figure 2(d) shows that the water quench conditions resulted in complete removal of the native oxide layer and obvious corrosion attack on the underlying structure of the Al-Zn-Si-Mg alloy coating. The new oxide layer that formed on the surface of the metal coating was characterized by a substantial presence of zinc oxide (corrosion product) in the layer and a much greater layer thickness. This resulted in an unsatisfactory passivation outcome.

The research and development work described with reference to Figures 2 (a) to 2 (d) indicates that water quench conditions that maintain the integrity of the underlying structure of a metal alloy coating allow the metal alloy coating to achieve a satisfactory passivation outcome, whereas water quench conditions that cause any corrosion attack to the underlying structure of the metal coating impair the ability of the metal alloy coating to be properly passivated.

Many modifications may be made to the present invention described above without departing from the scope of the invention.

By way of example, whilst the embodiment of the metal coating line shown in Figure 1 includes a coated strip cooling section 7 that includes water sprays, the present invention is not so limited and extends to any suitable water cooling system, such as dunk tanks.

## Claims

1. A method of forming a coating of a metal alloy on a steel strip to form a metal alloy coated steel strip, the method including a hot dip coating step of dipping steel strip into a bath of molten Al-Zn-Si-Mg alloy and forming a metal alloy coating of the Al-Zn-Si-Mg alloy on exposed surfaces of the steel strip, with exposed surfaces of the metal alloy coating oxidising and forming a native oxide layer after the metal alloy coated strip emerges from the metal coating bath, and a step of cooling the metal alloy coated strip with the native oxide layer with cooling water, and the method including controlling the pH of cooling water to be in a range of pH 5-9 and the temperature of cooling water to be in a range of 30-50°C in the strip cooling step to maintain the native oxide layer intact on the metal alloy coating during the downstream steps, the Al-Zn-Si-Mg alloy including the following ranges in % by weight of the elements Al, Zn, Si, and Mg:
| | |
|---|---|
| Zn: | 30 to 60 % |
| Si: | 0.3 to 3% |
| Mg: | 0.3 to 10 % |
Balance Al and unavoidable impurities.

2. The method defined in claim 1 wherein the strip cooling step includes controlling the pH of cooling water to be greater than 6.

3. The method defined in claim 1 or claim 2 wherein the strip cooling step includes controlling the pH of cooling water by adding acid to the cooling water.

4. The method defined in any one of the preceding claims wherein the native oxide layer includes Mg oxide, Al oxide, and a small amount of oxides of other elements of the Al-Zn-Si-Mg alloy coating.

5. The method defined in any one of the preceding claims wherein the strip cooling step is a water quench step.

6. The method defined in any one of the preceding claims wherein the strip cooling step is a closed loop cooling step that includes circulating water through a circuit that supplies water to the coated strip and collects and cools water and returns the cooled water for cooling the coated strip.

7. The method defined in claim 6 wherein the circuit includes a water storage tank, a spray system for supplying water to the coated strip from the tank, and a heat exchanger for cooling water after it has been sprayed onto the strip.

8. The method defined in any one of claims 1 to 5 wherein the strip cooling step is an open loop in which cooling water is not recycled in the cooling step.

## Patentansprüche

1. Verfahren zum Bilden einer Beschichtung aus einer Metalllegierung auf einem Stahlband, um ein mit Metalllegierung beschichtetes Stahlband zu bilden, das Verfahren beinhaltend einen Schmelztauchbeschichtungsschritt des Tauchens des Stahlbands in ein Bad aus geschmolzener Al-Zn-Si-Mg-Legierung und des Bildens einer Metalllegierungsbeschichtung aus der Al-Zn-Si-Mg-Legierung auf freiliegenden Oberflächen des Stahlbands beinhaltet, wobei freiliegende Oberflächen der Metalllegierungsbeschichtung oxidieren und eine native Oxidschicht bilden, nachdem das mit Metalllegierung beschichtete Band aus dem Metallbeschichtungsbad auftaucht, und einen Schritt des Kühlens des mit Metalllegierung beschichteten Bands mit der nativen Oxidschicht mit Kühlwasser, und wobei das Verfahren ein Regeln des pH-Werts des Kühlwassers auf innerhalb eines Bereichs von pH 5-9 und der Temperatur des Kühlwassers auf innerhalb eines Bereichs von 30-50 °C in dem Bandkühlschritt beinhaltet, um die native Oxidschicht auf der Metalllegierungsbeschichtung während der nachgelagerten Schritte unversehrt zu erhalten, wobei die Al-Zn-Si-Mg-Legierung die folgenden Bereiche, nach Gewichts-%, der Elemente Al, Zn, Si und Mg enthält:
| | |
|---|---|
| Zn: | 30 bis 60 % |
| Si: | 0,3 bis 3 % |
| Mg: | 0,3 bis 10 % |
Rest Al und unvermeidbare Verunreinigungen.

2. Verfahren nach Anspruch 1, wobei der Bandkühlschritt ein Regeln des pH-Werts des Kühlwassers auf mehr als 6 beinhaltet.

3. Verfahren nach Anspruch 1 oder Anspruch 2, wobei der Bandkühlschritt ein Regeln des pH-Werts des Kühlwassers durch Zugeben von Säure zum Kühlwasser beinhaltet.

4. Verfahren nach einem der vorhergehenden Ansprüche, wobei die native Oxidschicht Mg-Oxid, Al-Oxid und eine geringe Menge von Oxiden anderer Elemente der Al-Zn-Si-Mg-Legierungsbeschichtung enthält.

5. Verfahren nach einem der vorhergehenden Ansprüche, wobei der Bandkühlschritt ein Wasserabschreckschritt ist.

6. Verfahren nach einem der vorhergehenden Ansprüche, wobei der Bandkühlschritt ein Kühlschritt mit geschlossenem Kreislauf ist, der ein Zirkulieren von Wasser durch einen Kreislauf beinhaltet, der dem beschichteten Band Wasser zuführt und Wasser sammelt und kühlt und das gekühlte Wasser zum Kühlen des beschichteten Bands zurückführt.

7. Verfahren nach Anspruch 6, wobei der Kreislauf einen Wasserspeichertank, ein Sprühsystem zum Zuführen von Wasser aus dem Tank zu dem beschichteten Band und einen Wärmetauscher zum Kühlen von Wasser, nachdem es auf das Band aufgesprüht wurde, beinhaltet.

8. Verfahren nach einem der Ansprüche 1 bis 5, wobei der Bandkühlschritt ein offener Kreislauf ist, in dem Kühlwasser in dem Kühlschritt nicht zurückgeführt wird.

## Revendications

1. Procédé de formation d'un revêtement d'un alliage métallique sur une bande en acier pour former une bande en acier revêtue d'alliage métallique, le procédé comprenant une étape de revêtement par immersion à chaud consistant à immerger la bande en acier dans un bain d'alliage Al-Zn-Si-Mg fondu et à former un revêtement d'alliage métallique de l'alliage Al-Zn-Si-Mg sur des surfaces exposées de la bande en acier, les surfaces exposées du revêtement d'alliage métallique s'oxydant et formant une couche d'oxyde d'origine après que la bande revêtue d'alliage métallique ressort du bain de revêtement métallique, et une étape de refroidissement de la bande revêtue d'alliage métallique avec la couche d'oxyde d'origine avec de l'eau de refroidissement, et le procédé comprenant la régulation du pH de l'eau de refroidissement de sorte qu'il soit dans une plage de pH de 5 à 9 et de la température de l'eau de refroidissement de sorte qu'elle soit dans une plage de 30 à 50 °C à l'étape de refroidissement de la bande pour maintenir la couche d'oxyde d'origine intacte sur le revêtement d'alliage métallique pendant les étapes en aval, l'alliage Al-Zn-Si-Mg comprenant les plages suivantes en % en poids des éléments Al, Zn, Si et Mg :
| | |
|---|---|
| Zn : | 30 à 60 % |
| Si : | 0, 3 à 3 % |
| Mg : | 0,3 à 10 % |
Un complément en Al et des impuretés inévitables.

2. Procédé selon la revendication 1, dans lequel l'étape de refroidissement de la bande comprend la régulation du pH de l'eau de refroidissement de sorte qu'il soit supérieur à 6.

3. Procédé selon la revendication 1 ou la revendication 2, dans lequel l'étape de refroidissement de la bande comprend la régulation du pH de l'eau de refroidissement par ajout d'acide à l'eau de refroidissement.

4. Procédé selon l'une quelconque des revendications précédentes, dans lequel la couche d'oxyde d'origine comprend de l'oxyde de Mg, de l'oxyde d'Al et une petite quantité d'oxydes d'autres éléments du revêtement d'alliage Al-Zn-Si-Mg.

5. Procédé selon l'une quelconque des revendications précédentes, dans lequel l'étape de refroidissement de la bande est une étape de trempe à l'eau.

6. Procédé selon l'une quelconque des revendications précédentes, dans lequel l'étape de refroidissement de la bande est une étape de refroidissement à boucle fermée qui comprend de l'eau circulant à travers un circuit qui achemine l'eau vers la bande revêtue et recueille et refroidit l'eau puis renvoie l'eau refroidie pour refroidir la bande revêtue.

7. Procédé selon la revendication 6, dans lequel le circuit comprend un réservoir de stockage d'eau, un système de pulvérisation pour acheminer l'eau vers la bande revêtue depuis le réservoir, et un échangeur de chaleur pour refroidir l'eau après qu'elle a été pulvérisée sur la bande.

8. Procédé selon l'une quelconque des revendications 1 à 5, dans lequel l'étape de refroidissement de la bande est une boucle ouverte dans laquelle l'eau de refroidissement n'est pas recyclée dans l'étape de refroidissement.
